(19) Europäisches Patentamt
European Patent Office
Office européen des brevets

(11) **EP 2 663 616 B1**

(12) **FASCICULE DE BREVET EUROPEEN**

(45) Date de publication et mention
de la délivrance du brevet:
**15.06.2016 Bulletin 2016/24**

(21) Numéro de dépôt: **11817478.8**

(22) Date de dépôt: **20.12.2011**

(51) Int Cl.:
***C10G 65/04*** *(2006.01)*

(86) Numéro de dépôt international:
**PCT/FR2011/000668**

(87) Numéro de publication internationale:
**WO 2012/095566 (19.07.2012 Gazette 2012/29)**

(54) **PROCEDE D'HYDROTRAITEMENT DE CHARGES LOURDES D'HYDROCARBURES AVEC DES REACTEURS PERMUTABLES INCLUANT AU MOINS UNE ETAPE DE COURT-CIRCUITAGE D'UN LIT CATALYTIQUE**

VERFAHREN ZUR WASSERSTOFFBEHANDLUNG VON SCHWEREN KOHLENWASSERSTOFFEINSÄTZEN UNTER VERWENDUNG PERMUTIERBAREN REAKTOREN MIT MINDESTENS EINEM SCHRITT ZUM KURZSCHLIESSEN EINES KATALYSATORBETT

METHOD FOR HYDROTREATING HEAVY HYDROCARBON FEEDSTOCKS USING PERMUTABLE REACTORS, INCLUDING AT LEAST ONE STEP OF SHORT-CIRCUITING A CATALYST BED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2011 FR 1100074**

(43) Date de publication de la demande:
**20.11.2013 Bulletin 2013/47**

(73) Titulaire: **IFP Énergies nouvelles**
**92852 Rueil-Malmaison Cedex (FR)**

(72) Inventeurs:
- **BAZER-BACHI, Frédéric**
  **69230 Saint Genis-Laval (FR)**
- **BOYER, Christophe**
  **69390 Charly (FR)**
- **GUIBARD, Isabelle**
  **F-69360 St Symphorien d´ozon (FR)**
- **MARCHAL, Nicolas**
  **57310 Bertrange (FR)**
- **PLAIN, Cécile**
  **78100 Saint Germain en Laye (FR)**

(56) Documents cités:
**EP-A1- 0 026 508     FR-A1- 2 681 871**

**Description**

La présente invention concerne un procédé d'hydrotraitement d'une fraction lourde d'hydrocarbures utilisant un système de zones de garde permutables en lits fixes contenant chacune au moins deux lits catalytiques et dans lequel chaque fois que le lit catalytique qui est mis initialement en contact avec la charge est désactivé et/ou colmaté durant les étapes au cours desquelles la charge traverse successivement toutes les zones de garde, le point d'introduction de la charge est déplacé vers l'aval. La présente invention concerne également une installation pour la mise en oeuvre de ce procédé.

L'hydrotraitement des charges hydrocarbonées prend une importance de plus en plus grande dans la pratique du raffinage avec la nécessité croissante de réduire la quantité de soufre dans les coupes pétrolières et de convertir des fractions lourdes en fractions plus légères valorisables en tant que carburants et/ou produits chimiques. Il est en effet nécessaire, au vu des normes imposées par chaque pays pour les carburants commerciaux, de valoriser au mieux les bruts importés de plus en plus riches en fractions lourdes, en hétéroatomes et en métaux et de plus en plus pauvre en hydrogène.

L'hydrotraitement catalytique permet, par la mise en contact d'une charge hydrocarbonée avec un catalyseur et en présence d'hydrogène, de réduire sensiblement sa teneur en asphaltènes, métaux, soufre et autres impuretés tout en améliorant le rapport hydrogène sur carbone (H/C) et tout en la transformant plus ou moins partiellement en coupes plus légères. On entend ainsi par hydrotraitement (HDT) notamment des réactions d'hydrodésulfuration (HDS) par lesquelles on désigne les réactions permettant d'enlever du soufre de la charge avec production d'$H_2S$, des réactions d'hydrodésazotation (HDN) par lesquelles on désigne les réactions permettant d'enlever l'azote de la charge avec production de $NH_3$, et des réactions d'hydrodémétallation par lesquelles on désigne les réactions permettant d'enlever les métaux de la charge par précipitation, mais aussi l'hydrogénation, l'hydrodéoxygéna-tion, l'hydrodéaromatisation, l'hydroisomérisation, l'hydrodéalkylation et l'hydro-déasphaltage.

Deux types de procédé d'hydrotraitement permettant le traitement de charges lourdes telles que des résidus atmosphériques (RA) ou sous vide (RSV) existent : les procédés en lit fixe et les procédés en lit bouillonnant. Zong et al. (Recent Patents on Chemical Engineering, 2009, 2, 22-36) résument les différents procédés connus dans le traitement de charges pétrolières lourdes.

La technologie des procédés à lit fixe est industriellement la plus répandue en raison de sa maturité technique, un coût moindre et une performance stable et fiable. Dans de tels procédés, la charge circule à travers plusieurs réacteurs à lit fixe disposés en série, le ou les premiers réacteurs étant utilisés pour y réaliser surtout l'hydrodémétallation de la charge (étape dite d'HDM) ainsi qu'une partie de l'hydrodésulfuration, le ou les derniers réacteurs étant utilisés pour y réaliser le raffinage profond de la charge (étape d'hydrotraitement HDT), et en particulier l'hydrodésulfuration (étape dite d'HDS). Les effluents sont soutirés du dernier réacteur d'HDT.

Les procédés en lit fixe conduisent à des performances en raffinage élevées (production de coupes 370°C$^+$ avec moins de 0,5% poids de soufre et contenant moins de 20 ppm de métaux) à partir de charge contenant jusqu'à 5% poids de soufre et jusqu'à 300 ppm de métaux, notamment du nickel et du vanadium). Les différents effluents ainsi obtenus peuvent servir de-bases pour la production de fiouls lourds de bonne qualité, de gazole et d'essence, ou de charges pour d'autres unités telles que le craquage catalytique.

Au-delà de cette teneur en métaux, il est connu que les premiers lits catalytiques peuvent se désactiver rapidement en raison de l'important dépôt de métaux qui se produit. Pour compenser cette désactivation, la température du réacteur est alors augmentée. Néanmoins, cette augmentation de la température favorise le dépôt de coke accélérant les processus de colmatage intragranulaire (bouchage de la porosité du catalyseur) et extragranulaire (bouchage du lit catalytique). Au-delà de telles teneurs en métaux dans la charge, des procédés en lit bouillonnant sont ainsi généralement préférés. En effet, un problème posé par l'hydrotraitement catalytique en lit fixe de ces charges vient de ce que, lors des réactions d'hydrotraitement de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous la forme d'un sulfure solide qui vient se fixer sur le catalyseur. C'est en particulier le cas des complexes du vanadium, du nickel, du fer, du sodium, du titane, du silicium et du cuivre qui sont naturellement présents dans les pétroles bruts en plus ou moins grande importance selon l'origine du pétrole, et qui, lors des opérations de distillation ont tendance à se concentrer dans les fractions à point d'ébullition élevé et en particulier dans les résidus. Au dépôt de ces impuretés s'ajoute aussi celui du coke, l'ensemble tend alors à désactiver et colmater rapidement le système catalytique. Ces phénomènes conduisent à des arrêts des unités d'hydrotraitement pour le remplacement des solides et à une surconsommation de catalyseur que l'homme du métier souhaite minimiser.

Un autre problème posé par l'hydrotraitement catalytique en lit fixe de ces charges est le colmatage. Il est connu que les lits catalytiques, notamment les parties supérieures des lits catalytiques, et plus particulièrement les parties supérieures du premier lit catalytique en contact avec la charge, sont susceptibles de se colmater assez rapidement à cause des asphaltènes et sédiments contenus dans la charge, ce qui s'exprime dans un premier temps par une augmentation de la perte de charge et nécessite tôt ou tard un arrêt de l'unité pour le remplacement du catalyseur.

Il s'ensuit donc qu'on est conduit à arrêter l'unité pour remplacer les premiers lits catalytiques désactivés et/ou colmatés. Les procédés d'hydrotraitement de ce type de charges doivent donc être conçus de façon à permettre un cycle d'opération le plus long possible sans arrêter l'unité.

**Etat de l'art**

On a cherché à résoudre ces inconvénients des agencements en lits fixes de différentes manières, notamment en utilisant des lits de garde agencés en amont des réacteurs principaux. La principale tache des lits de garde est de protéger les catalyseurs des réacteurs principaux d'HDM et d'HDT en aval en effectuant une partie de la démétallation et en filtrant les particules contenues dans la charge qui peuvent conduire au colmatage. Les lits de garde sont généralement intégrés dans la section HDM dans un procédé d'hydrotraitement de charges lourdes incluant généralement une première section d'HDM puis une deuxième section d'HDT. Bien que les lits de garde soient généralement utilisés pour effectuer une première hydrodémétallation et un filtrage, d'autres réactions d'hydrotraitement (HDS, HDN...) auront inévitablement lieu dans ces réacteurs grâce à la présence d'hydrogène et d'un catalyseur.

On a ainsi pensé à installer un ou plusieurs réacteurs en lit mobile en tête de l'étape HDM (US3910834 ou GB2124252). Ces lits mobiles peuvent marcher a co-courant (procédé HYCON de SHELL par exemple) ou a contre-courant (procédé OCR de Chevron Lummus Global et procédé HYVAHL-M™ de la demanderesse par exemple).

On a aussi pensé à ajouter un réacteur de garde en lit fixe devant les réacteurs d'HDM (US4118310 et US3968026). Le plus souvent ce réacteur de garde peut être court-circuité par utilisation notamment d'une vanne d'isolement. On obtient ainsi une protection temporaire des réacteurs principaux contre le colmatage.

De même, il a également été décrit, par la demanderesse notamment (FR2681871 et US5417846), un système permettant d'associer les hautes performances du lit fixe avec un facteur opératoire élevé pour le traitement de charges à teneurs élevées en métaux qui consiste en un procédé d'hydrotraitement en au moins deux étapes d'une fraction lourde d'hydrocarbures contenant des asphaltènes, des impuretés soufrées et des impuretés métalliques dans lequel au cours de la première étape dite d'HDM on fait passer, dans des conditions d'HDM, la charge d'hydrocarbures et d'hydrogène sur un catalyseur d'HDM, puis au cours de la deuxième étape subséquente on fait passer, dans des conditions d'HDT, l'effluent de la première étape sur un catalyseur, d'HDT. L'étape d'HDM comprend une ou plusieurs zones d'HDM en lits fixes précédées d'au moins deux zones de garde d'HDM, appelées aussi « réacteurs permutables », également en lits fixes, disposées en série pour être utilisées de façon cyclique consistant en la répétition successive des étapes b) et c) définies ci-après :

a) une étape, dans laquelle les zones de garde sont utilisées toutes ensembles pendant une durée au plus égale au temps de désactivation et/ou de colmatage de l'une d'entre elles,

b) une étape, durant laquelle la zone de garde désactivée et/ou colmatée est court-circuitée et le catalyseur qu'elle contient est régénéré et/ou remplacé par du catalyseur frais et durant laquelle la ou les autres zone(s) de garde sont utilisée(s),

c) une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde.

Ce procédé, connu sous le nom de HYVAHL-F™, permet d'atteindre une désulfuration globale supérieure à 90% et une démétallation globale de l'ordre de 95%. L'utilisation des réacteurs permutables permet un fonctionnement cyclique en continu.

On a maintenant découvert de façon surprenante qu'il est possible d'augmenter la durée d'utilisation des réacteurs permutables avant que le remplacement du catalyseur contenu dans un réacteur permutable devienne nécessaire. La présente invention améliore ainsi les performances des réacteurs permutables telles que décrit par la demanderesse dans le brevet FR2681871 en intégrant dans ce procédé au moins deux lits catalytiques dans chaque réacteur permutable et en intégrant dans certaines étapes du procédé au moins une étape de court-circuitage de lits catalytiques désactivés et/ou colmatés, aussi appelé étape de by-pass.

Dans les lits catalytiques, le colmatage s'effectue à priori dans les parties supérieures des lits catalytiques, et notamment dans les parties supérieures du premier lit catalytique mis en contact avec la charge dans le sens de l'écoulement. Il en est de même pour la désactivation du catalyseur (dépôt de métaux). Selon l'invention, chaque fois qu'un lit catalytique est désactivé et/ou colmaté, ce lit catalytique est court-circuité et le point d'introduction de la charge est déplacé par rapport à ce lit vers l'aval sur le prochain lit catalytique non encore désactivé et/ou colmaté du même réacteur permutable.

Ainsi, on utilise par des étapes de court-circuitage successives de la ou des parties la ou les plus colmatées et/ou désactivées du réacteur pleinement le volume de chaque réacteur permutable jusqu'à son épuisement (c'est à dire jusqu'à ce que son dernier lit catalytique soit également désactivé et/ou colmaté), tout en maintenant le fonctionnement cyclique des réacteurs permutables. On utilise ainsi plus longtemps le ou les lit(s) en aval du ou des lit(s) désactivé(s) et/ou colmaté(s) du même réacteur. Ceci a comme effet d'augmenter la durée de chaque étape du cycle des réacteurs permutables au cours de laquelle la charge traverse successivement tous les réacteurs, ce qui permet d'obtenir un cycle d'opération des réacteurs permutables prolongé.

Cette prolongation du cycle entraîne une augmentation du facteur opératoire de l'unité ainsi qu'une économie de temps, une réduction des coûts opératoires et une réduction de la consommation du catalyseur frais. L'objectif de la présente demande est ainsi d'augmenter la durée du cycle des réacteurs permutables.

**Description détaillée**

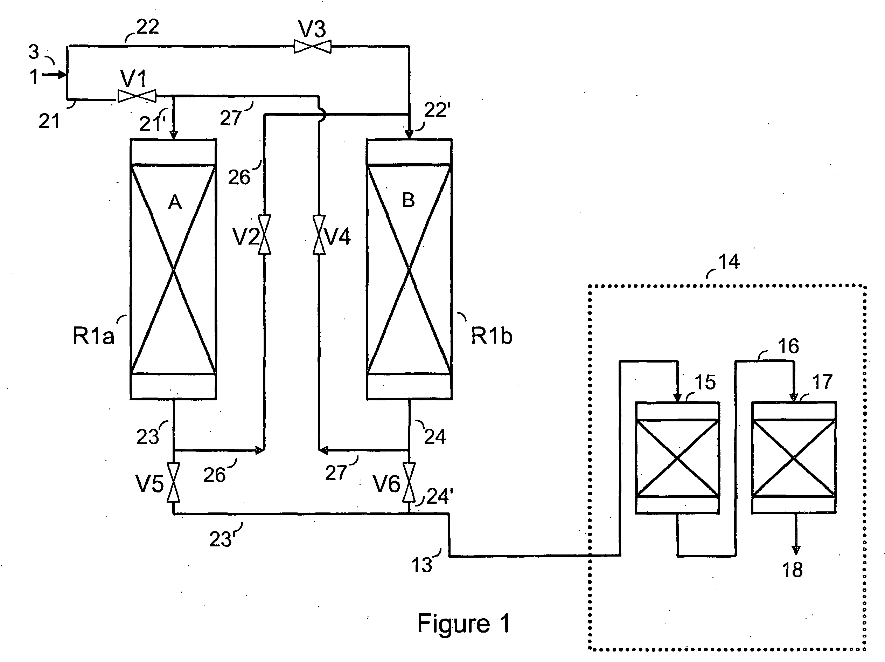

La présente invention présente une amélioration du procédé d'hydrotraitement effectué par les zones de garde (réacteurs permutables) tel que décrit dans le brevet FR2681871. Le fonctionnement des zones de garde selon FR2681871 est décrit dans la figure 1 comportant deux zones de garde (ou réacteurs permutables) R1a et R1b. Ce procédé d'hydrotraitement comprend une série de cycles comportant chacun quatre étapes successives :

- une première étape (dénommée par la suite "étape a") au cours de laquelle la charge traverse successivement le réacteur R1a, puis le réacteur R1b,
- une deuxième étape (dénommée par la suite "étape b") au cours de laquelle la charge traverse uniquement le réacteur R1b, le réacteur R1a étant court-circuité pour régénération et/ou remplacement du catalyseur,
- une troisième étape (dénommée par la suite "étape c") au cours de laquelle la charge traverse successivement le réacteur R1b, puis le réacteur R1a,
- une quatrième étape (dénommée par la suite "étape d") au cours de laquelle la charge traverse uniquement le réacteur R1a, le réacteur R1 b étant court-circuité pour régénération et/ou remplacement du catalyseur.

Au cours de l'étape a) du procédé, la charge est introduite par la ligne 3 et la ligne 21 comportant une vanne V1 ouverte vers la ligne 21' et le réacteur de garde R1a renfermant un lit fixe A de catalyseur. Durant cette période les vannes V3, V4 et V5 sont fermées. L'effluent du réacteur R1a est envoyé par la conduite 23, la conduite 26 comportant une vanne V2 ouverte et la conduite 22' dans le réacteur de garde R1b renfermant un lit fixe B de catalyseur. L'effluent du réacteur R1b est envoyé par les conduites 24 et 24' comportant une vanne V6 ouverte et la conduite 13 à la section d'hydrotraitement principale 14.

Au cours de l'étape b) du procédé les vannes V1, V2, V4 et V5 sont fermées et la charge est introduite par la ligne 3 et la ligne 22 comportant une vanne V3 ouverte vers la ligne 22' et le réacteur R1 b. Durant cette période l'effluent du réacteur R1 b est envoyé par les conduites 24 et 24' comportant une vanne V6 ouverte et la conduite 13 à la section d'hydrotraitement principale 14.

Au cours de l'étape c) les vannes V1, V2 et V6 sont fermées et les vannes V3, V4 et V5 sont ouvertes. La charge est introduite par la ligne 3 et les lignes 22 et 22' vers le réacteur R1b. L'effluent du réacteur R1b est envoyé par la conduite 24, la conduite 27 comportant une vanne V4 ouverte et la conduite 21' dans le réacteur de garde R1a. L'effluent du réacteur R1a est envoyé par les conduites 23 et 23' comportant une vanne V5 ouverte et la conduite 13 à la section d'hydrotraitement principale 14. Au cours d'étape d) les vannes V2, V3, V4 et V6 sont fermées et les vannes V1 et V5 sont ouvertes. La charge est introduite par la ligne 3 et les lignes 21 et 21' vers le réacteur R1a. Durant cette période l'effluent du réacteur R1a est envoyé par les conduites 23 et 23' comportant une vanne V5 ouverte et la conduite 13 à la section d'hydrotraitement principale 14.

Le cycle recommence ensuite de nouveau. Les opérations sur les vannes de l'unité permettant le fonctionnement des réacteurs permutables selon FR2681871 sont reportées au tableau 1.

Tableau 1 : Opérations sur les vannes autour des réacteurs permutables selon FR2681871 (sans by-pass externe)

| Étape Cycle | | Intervention | V1 | V2 | V3 | V4 | V5 | V6 |
|---|---|---|---|---|---|---|---|---|
| a | R1A + R1B | - | O* | O | F** | F | F | O |
| b | R1B | R1A | F | F | O | F | F | O |
| c | R1B + R1A | - | F | F | O | O | O | F |
| d | R1A | R1B | O | F | F | F | O | F |
| a | R1A + R1B | - | O | O | F | F | F | O |
| * O = ouvert, **F = fermé | | | | | | | | |

Selon la présente invention, on ajoute aux étapes du procédé telles que décrites ci-dessus, des étapes supplémentaires de court-circuitage de lits catalytiques désactivés et/ou colmatés (étape a' et c') pendant les étapes du cycle au cours desquelles la charge traverse successivement les deux réacteurs (étapes a) et c)).

Plus particulièrement, la présente invention concerne un procédé d'hydrotraitement d'une fraction lourde d'hydrocarbures contenant des asphaltènes, des sédiments, des impuretés soufrées, azotées et métalliques dans lequel on fait passer, dans des conditions d'hydrotraitement, la charge d'hydrocarbures et d'hydrogène sur un catalyseur d'hydrotraitement, dans au moins deux zones de garde d'hydrotraitement en lits fixes contenant chacune au moins deux lits catalytiques, les zones de garde étant disposées en série pour être utilisées de façon cyclique consistant en la répétition successive des étapes b), c) et c') définies ci-après :

- une étape a) durant laquelle la charge traverse tous les lits catalytiques des zones de garde pendant une durée au plus égale au temps de désactivation et/ou de colmatage d'une zone de garde,
- une étape a') durant laquelle la charge est introduite, en court-circuitant le lit catalytique désactivé et/ou colmaté, sur le prochain lit catalytique non encore désactivé et/ou colmaté de la même zone de garde pendant une durée au plus égale au temps de désactivation et/ou de colmatage d'une zone de garde, l'étape a') étant répétée jusqu'à ce que la charge soit introduite sur le dernier lit catalytique non encore désactivé et/ou colmaté de la même zone de garde pendant une durée au plus égale au temps de désactivation et/ou de colmatage d'une zone de garde,
- une étape b) durant laquelle la zone de garde désactivée et/ou colmatée est court-circuitée et le catalyseur qu'elle contient est régénéré et/ou remplacé par du catalyseur frais et durant laquelle la ou les autres zone(s) de garde sont utilisée(s),
- une étape c) durant laquelle la charge traverse tous les lits catalytiques des zones de garde, la zone de garde dont le catalyseur a été régénéré au cours de l'étape précédente étant reconnectée de manière à être en aval de l'ensemble des autres zones de garde et ladite étape étant poursuivie pendant une durée au plus égale au temps de désactivation et/ou de colmatage d'une zone de garde,
- une étape c') durant laquelle la charge est introduite sur le prochain lit catalytique non encore désactivé et/ou colmaté de la même zone de garde pendant une durée au plus égale au temps de désactivation et/ou de colmatage d'une zone de garde, l'étape c') étant répétée jusqu'à ce que la charge soit introduite sur le dernier lit catalytique non encore désactivé et/ou colmaté de la même zone de garde pendant une durée au plus égale au temps de désactivation et/ou de colmatage d'une zone de garde,
- une étape d) durant laquelle la zone de garde désactivée et/ou colmatée est court-circuitée et le catalyseur qu'elle contient est régénéré et/ou remplacé par du catalyseur frais et durant laquelle la ou les autres zone(s) de garde sont utilisée(s).

Les zones de garde, notamment la première zone de garde mise en contact avec la charge, se chargent progressivement en métaux, coke, sédiments et autres impuretés diverses. Lorsque le catalyseur ou les catalyseurs qu'elles contiennent est/sont pratiquement saturé(s) en métaux et impuretés diverses, les zones doivent être déconnectées pour effectuer le remplacement et/ou la régénération de catalyseur(s). De préférence, les catalyseurs sont remplacés. Ce moment est appelé temps de désactivation et/ou de colmatage. Bien que le temps de désactivation et/ou de colmatage varie en fonction de la charge, des conditions opératoires et du ou des catalyseurs utilisés, il s'exprime d'une manière générale par une chute de la performance catalytique (une augmentation de la concentration de métaux et/ou d'autres impuretés dans l'effluent), une augmentation de la température nécessaire pour le maintien d'un hydrotraitement constant ou, dans le cas spécifique d'un colmatage, par une augmentation significative de la perte de charge. La perte de charge $\Delta$p, exprimant un degré de colmatage, est mesurée en permanence durant tout le cycle sur chacune des zones et peut se définir par une augmentation de pression résultant du passage partiellement bloqué de l'écoulement au travers de la zone. De même, la température est mesurée en permanence durant tout le cycle sur chacune des deux zones.

Afin de définir un temps de désactivation et/ou de colmatage, l'homme du métier définit au préalable une valeur maximalement tolérable de la perte de charge $\Delta$p et/ou de la température en fonction de la charge à traiter, des conditions opératoires et catalyseurs choisis, et à partir de laquelle il faut procéder à un court-circuitage d'un lit catalytique ou à la déconnection de la zone de garde. Le temps de désactivation et/ou de colmatage se définit ainsi comme le temps où la valeur limite de la perte de charge et/ou de la température est atteinte. La valeur limite de la perte de charge et/ou de la température est en règle générale confirmée lors de la première mise en service des réacteurs. Dans le cas d'un procédé d'hydrotraitement de fractions lourdes, la valeur limite de la perte de charge se situe généralement entre 0.3 et 1 MPa (3 et 10 bars), de préférence entre 0.5 et 0.8 MPa (5 et 8 bars). La valeur limite de la température se situe généralement entre 400°C et 430°C, la température correspondant, ici et dans la suite du texte, à la température moyenne mesurée du lit catalytique. Une autre valeur limite sur les températures, indiquant que la désactivation est atteinte (moins de réactions exothermiques) est que l'écart de température ($\Delta$T) sur un lit catalytique devient inférieur à 5 °C, et ce indépendamment de la valeur de la température moyenne.

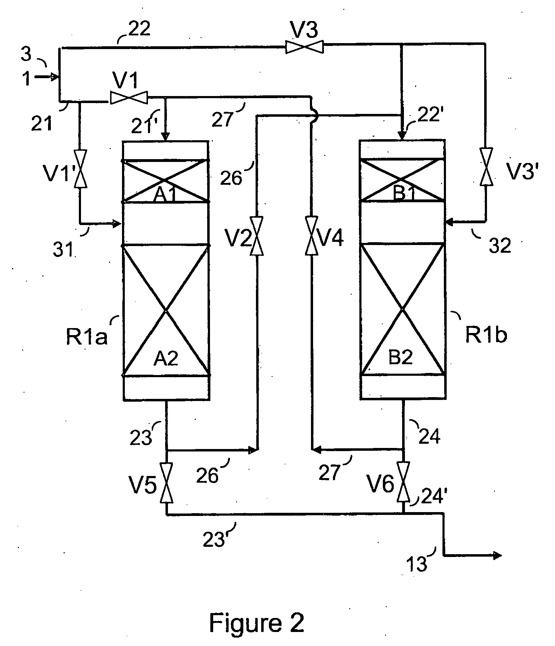

La figure 2 montre le procédé d'hydrotraitement selon la présente invention utilisant un système de deux réacteurs permutables contenant chacun deux lits catalytiques et dans lequel les lits catalytiques sont court-circuitables. Dans le cas représenté sur la figure 2 le procédé comprend une série de cycles comportant chacun six étapes successives, les étapes a), b) c) et d) étant identiques au procédé décrit dans FR2681871 :

- une étape a) au cours de laquelle la charge traverse successivement tous les lits catalytiques du réacteur R1a, puis tous les lits catalytiques du réacteur R1b,
- une étape a') (étape de by-pass) au cours de laquelle la charge court-circuite le lit catalytique désactivé et/ou colmaté A1 du premier réacteur R1a et est introduite dans le prochain lit catalytique A2 en aval, puis traverse tous les lits catalytiques du réacteur R1b,
- une étape b), après désactivation et/ou colmatage du lit A2, au cours de laquelle la charge traverse tous les lits catalytiques du réacteur R1b uniquement, le réacteur R1 a étant court-circuité pour régénération et/ou remplacement du catalyseur,
- une étape c) au cours de laquelle la charge traverse successivement tous les lits catalytiques du réacteur R1b, puis tous les lits catalytiques du réacteur R1a,
- une étape c') (étape de by-pass) au cours de laquelle la charge court-circuite le lit catalytique désactivé et/ou colmaté B1 du réacteur R1b et est introduite dans le prochain lit catalytique B2 en aval, puis traverse tous les lits catalytiques du réacteur R1a,
- une étape d), après désactivation et/ou colmatage du lit B2, au cours de laquelle la charge traverse tous les lits catalytiques du réacteur R1a uniquement, le réacteur R1b étant court-circuité pour régénération et/ou remplacement du catalyseur.

Ainsi, à l'étape a) la charge est introduite par la ligne 3 et les lignes 21 et 21' comportant une vanne V1 ouverte vers le réacteur de garde R1a et traverse les lits fixes A1 et A2. Durant cette période les vannes V1', V3, V3', V4 et V5 sont fermées. L'effluent du réacteur R1a est envoyé par la conduite 23, la conduite 26 comportant une vanne V2 ouverte et la conduite 22' dans le réacteur de garde R1b et traverse les lits catalytiques B1 et B2. L'effluent est évacué du réacteur R1b par les conduites 24 et 24' comportant une vanne V6 ouverte et la conduite 13.

Au fur et à mesure, les lits catalytiques, et notamment le premier lit catalytique étant mis en contact avec la charge (A1 du réacteur R1a), vont se colmater et/ou se désactiver. Le moment où l'on considère que le premier lit catalytique étant mis en contact avec la charge est désactivé et/ou colmaté est mesuré par la perte de charge $\Delta p$ et /ou la température d'une zone de garde. On défini préalablement une valeur maximalement tolérable pour la perte de charge et/ou la température à partir de laquelle il faut soit court-circuiter le lit catalytique désactivé et/ou colmaté, soit procéder au remplacement du catalyseur dans le réacteur. Chaque fois que cette valeur limite est atteinte, le lit catalytique étant colmaté et/ou désactivé est court-circuité en introduisant la charge par un dispositif de contournement (by-pass) externe au réacteur sur le prochain lit catalytique non encore désactivé et/ou colmaté en aval du même réacteur.

Ainsi, selon la figure 2, une fois que la valeur maximale de la perte de charge et/ou de la température est atteinte, la vanne V1 est fermée et la charge est introduite par la ligne 31 comportant une vanne V1' ouverte sur le prochain lit catalytique A2 dans le réacteur R1a (étape a'). Le lit catalytique A1 désactivé et/ou colmaté est donc court-circuité. Le lit catalytique A2 est beaucoup moins colmaté et/ou désactivé que le premier lit A1 ce qui permet d'augmenter sensiblement le temps de la première période en utilisant plus longtemps le lit inférieur A2.

Au fur et à mesure, ce prochain lit catalytique A2 est également colmaté et/ou désactivé. Quand la valeur maximale de perte de charge et/ou de la température est atteinte, on procède alors à l'étape b) au cours de laquelle la charge traverse tous les lits catalytiques du réacteur R1 b uniquement, le réacteur R1 a étant court-circuité pour régénération et/ou remplacement du catalyseur. Ainsi, au cours de l'étape b) les vannes V1, V1', V2, V3', V4 et V5 sont fermées et la charge est introduite par la ligne 3 et les lignes 22 et 22' comportant une vanne V3 ouverte vers le réacteur R1b. Durant cette période l'effluent du réacteur R1b est évacué par les conduites 24 et 24' comportant une vanne V6 ouverte et par la conduite 13.

Après la reconnexion du réacteur R1a dont le catalyseur a été régénéré ou remplacé an aval du réacteur R1b, on procède alors à l'étape c) du procédé au cours de laquelle la charge traverse successivement le réacteur R1b, puis le réacteur R1a. Ainsi, au cours de l'étape c) les vannes V1, V1', V2, V3' et V6 sont fermées et les vannes V3, V4 et V5 sont ouvertes. La charge est introduite par la ligne 1 et les lignes 22 et 22' vers le réacteur R1b. L'effluent du réacteur R1b est envoyé par la conduite 24, la conduite 27 comportant une vanne V4 ouverte et la conduite 21' dans le réacteur de garde R1a. L'effluent du réacteur R 1 a est évacué par les conduites 23 et 23' comportant la vanne V5 ouverte et par la conduite 13.

Au fur et à mesure, les lits catalytiques, et notamment le premier lit B1 du réacteur R1b, vont se colmater et/ou se désactiver. On procède alors de la même manière que dans l'étape a') à un court-circuitage du lit catalytique B1 désactivé et/ou colmaté, nommée étape c'). Ainsi, selon la figure 2, une fois que la valeur maximale de perte de charge et/ou de la température est atteinte, la vanne V3 est fermée et la charge est introduite dans le réacteur par la ligne 32 comportant une vanne V3' ouverte sur le prochain lit B2 dans le réacteur R1b. Le lit catalytique B1 désactivé et/ou colmaté est donc court-circuité. Le lit catalytique B2 est beaucoup moins colmaté et/ou désactivé que le premier lit catalytique B1 ce qui permet d'augmenter sensiblement le temps de la troisième période en utilisant plus longtemps le lit inférieur B2.

Au fur et à mesure, ce prochain lit catalytique B2 est également colmaté et/ou désactivé. Quand la valeur maximale de la perte de charge et/ou de la température est atteinte, on procède alors à la l'étape d) au cours de laquelle la charge traverse tous les lits catalytiques du réacteur R1a uniquement, le réacteur R1b étant court-circuité pour régénération et/ou remplacement du catalyseur. Au cours de cette étape les vannes V1', V2, V3, V3', V4 et V6 sont fermées et les vannes V1 et V5 sont ouvertes. La charge est introduite par la ligne 3 et les lignes 21 et 21' vers le réacteur R1a. Durant cette période l'effluent du réacteur R1a est évacué par les conduites 23 et 23' comportant la vanne V5 ouverte et par la conduite 13.

Après la régénération et/ou le remplacement du catalyseur du réacteur R1b, ce réacteur est reconnecté en aval du réacteur R1a et le cycle recommence.

Les opérations sur les vannes de l'unité permettant le fonctionnement des deux réacteurs permutables comportant deux lits catalytiques court-circuitables selon la présente invention sont reportées au tableau 2.

Tableau 2 : Opérations sur les vannes pour le système de réacteurs permutables avec by-pass externe (selon l'invention)

| Étape Cycle | | Intervention | V1 | V1' | V2 | V3 | V3' | V4 | V5 | V6 |
|---|---|---|---|---|---|---|---|---|---|---|
| a | R1A + R1B | - | O* | F** | O | F | F | F | F | O |
| a' | R1A + R1B | - | F | O | O | F | F | F | F | O |
| b | R1B | R1A | F | F | F | O | F | F | F | O |
| c | R1B + R1A | - | F | F | F | O | F | O | O | F |
| c' | R1B + R1A | - | F | F | F | F | O | O | O | F |
| d | R1A | R1B | O | F | F | F | F | F | O | F |
| a | R1A + R1B | - | O | F | O | F | F | F | F | O |
| * O = ouvert, **F = fermé | | | | | | | | | | |

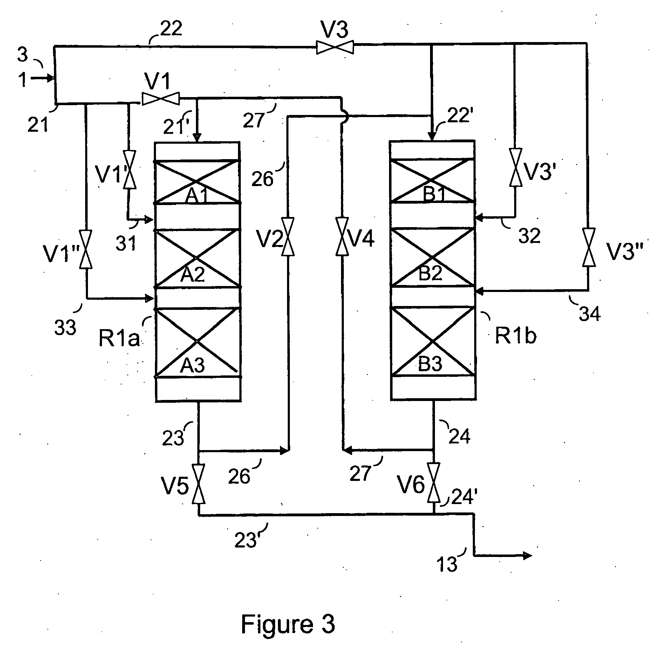

Le système des réacteurs permutables avec by-pass externe peut être étendu sur des réacteurs ayant plus de deux lits catalytiques, par exemple 3, 4 ou 5 lits catalytiques. Dans ce cas, le by-pass externe alimente par des lignes et vannes supplémentaires respectivement le prochain lit catalytique en aval du lit catalytique désactivé et/ou colmaté dès que la valeur maximale de la perte de charge et /ou de la température est atteinte. On répète ainsi l'étape a') ou c') tel que définie ci-dessus. Ce court-circuitage de lits catalytiques peut se faire jusqu'à ce que le dernier lit catalytique du réacteur dans le sens de l'écoulement soit désactivé et/ou colmaté. Ensuite, il faut procéder au remplacement du catalyseur contenu dans le réacteur. La figure 3 montre le procédé d'hydrotraitement selon la présente invention utilisant un système de deux réacteurs permutables contenant chacun trois lits catalytiques A1, A2, A3 et B1, B2 et B3 respectivement. Dans la figure 3, les étapes a), a'), b), c) c') et d) (et signes de références) sont identiques à la figure 2, sauf que les étapes a') et c') sont répétées. On se limitera à la description de cette répétition pour cette figure. Ainsi, durant l'étape a'), une fois que le lit catalytique A1, puis le lit catalytique A2 sont désactivés et/ou colmatés, la vanne V1' est fermée et la charge est introduite par la ligne 33 comportant une vanne V1" ouverte sur le prochain lit catalytique A3 dans le réacteur R1a. Quand ce troisième lit A3 est également colmaté et/ou désactivé, on procède alors à l'étape b) (remplacement/régénération du réacteur R1a). De façon analogue, durant l'étape c') une fois que le lit catalytique B1, puis le lit catalytique B2 sont désactivés et/ou colmatés, la vanne V3' est fermée et la charge est introduite par la ligne 34 comportant une vanne V3" ouverte sur le prochain lit catalytique B3 dans le réacteur R1 b. Quand ce troisième lit B3 est également colmaté et/ou désactivé, on procède alors à l'étape d) (remplacement/régénération du réacteur R1b).

Dans une forme préférée de réalisation les lits catalytiques contenus dans une zone de garde peuvent être de volumes différents ou identiques avec néanmoins comme condition que le volume du dernier lit soit plus grand que chaque volume des autres lits. De préférence, les lits catalytiques dans une même zone de garde sont de volumes croissants dans le sens de l'écoulement. En effet, puisque le colmatage et/ou la désactivation se fait principalement sur le premier lit catalytique, il est avantageux de minimiser le volume de ce premier lit.

Le volume de chaque lit peut se définir de la façon suivante: Chaque zone de garde possède n lits, chaque lit i ayant un volume $V_i$, le volume catalytique total du réacteur $V_{tot}$ étant la somme des volumes $V_i$ des n lits :

$$V_{tot} = V_1 + ... V_i + V_{i+1} ... + V_{n-1} + V_n$$

Chaque volume $V_i$ d'un lit i compris dans les n-1 premier lits de la zone de garde est définit entre 5% du volume total $V_{tot}$ et le pourcentage résultant du volume total $V_{tot}$ divisé par le nombre de lits n:

$$5\% \; V_{tot} \geq V_i \geq (V_{tot} / n)$$

Pour deux lits consécutifs i et i+1, le volume du premier lit $V_i$ est inférieur ou égal au volume du prochain lit $V_{i+1}$, sauf pour les deux derniers lits consécutifs $V_{n-1}$ et $V_n$ où le volume de l'avant dernier lit $V_{n-1}$ est strictement inférieur au volume du dernier lit $V_n$.

Dans le cas de deux lits catalytiques dans une zone de garde, le volume V1 du premier lit est ainsi entre 5 et 49 %, le volume du deuxième lit est entre 51 et 95 %. Dans le cas de trois lits catalytiques dans une zone de garde, le volume V1 du premier lit est ainsi entre 5 et 33 %, le volume V2 du deuxième lit entre 5 et 33% et le volume V3 du troisième lit est entre 34 et 90 %.

Le volume maximal du ou des lit(s) catalytique(s) court-circuité(s) dans une zone de garde durant les étapes a') et c'), aussi appelé "fraction court-circuitable", est la somme des volumes $V_1+...V_i + V_{i+1}...+V_{n-1}$ des n-1 lits (ou encore le volume total moins le volume du dernier lit n). Ce volume maximal du ou des lit(s) catalytique(s) court-circuité(s) est définit comme étant inférieur au pourcentage exprimé par la formule $((n-1) V_{tot})/n$, n étant le nombre de lit dans une zone de garde, $V_{tot}$ étant le volume catalytique total de la zone de garde.

A partir d'une certaine valeur de fraction court-circuitée, généralement supérieure ou égale à $((n-1) V_{tot})/n$, la quantité de colmatant et de métaux accumulée dans le dernier lit du premier réacteur et celle accumulée dans le second réacteur deviennent très proches. Il se peut ainsi qu'on observe une perte de charge et/ou augmentation de température atteignant la valeur maximale dans les deux réacteurs quasiment en même temps pouvant mener à un dysfonctionnement des réacteurs en continu. Il est ainsi important d'avoir un volume minimal non court-circuitable dans le premier réacteur pour protéger le deuxième réacteur et avoir le temps de régénérer le premier réacteur avant la montée de la perte de charge et/ou de la température dans le deuxième réacteur. Afin de maximiser la durée d'une étape au cours de laquelle la charge traverse successivement tous les réacteurs, il est donc intéressant de court-circuiter une quantité importante du réacteur, sans toutefois dépasser une valeur limite.

Dans une forme préférée de réalisation on utilise une section de conditionnement du catalyseur permettant la permutation en marche de ces zones de garde, c'est-à-dire sans arrêter le fonctionnement de l'unité : tout d'abord, un système qui fonctionne à pression modérée (de 10 à 50 bars, mais de préférence de 15 à 25 bars) permet d'assurer les opérations suivantes sur le réacteur de garde déconnecté : lavage, strippage, refroidissement, avant déchargement du catalyseur usé ; puis chauffage et sulfuration après chargement du catalyseur frais ; ensuite un autre système de pressurisation/dépressurisation et de robinets-vannes de technologie appropriée permet effectivement de permuter ces zones de garde sans arrêter l'unité, c'est-à-dire sans affecter le facteur opératoire, puisque toutes les opérations de lavage, strippage, déchargement du catalyseur usé, rechargement du catalyseur frais, chauffage, sulfuration se font sur le réacteur ou zone de garde déconnecté. Alternativement, un catalyseur pré-activé peut être utilisé dans la section de conditionnement de manière à simplifier la procédure de permutation en marche.

Chaque zone de garde contient au moins deux lits catalytiques (par exemple 2, 3, 4, ou 5 lits catalytiques). Chaque lit catalytique contient au moins une couche catalytique contenant un ou plusieurs catalyseurs, éventuellement complété par au moins une couche inerte. Les catalyseurs utilisés dans le ou les lit(s) catalytique(s) peuvent être identiques ou différents.

Le procédé d'hydrotraitement par les réacteurs permutables avec by-pass externe permet ainsi d'augmenter sensiblement la durée d'un cycle. Durant les étapes de court-circuitage la charge subit un temps de séjour écourté dans les réacteurs permutables à cause du by-pass. Afin de maintenir le taux d'hydrotraitement constant en sortie du dernier réacteur, la température dans les zones de garde est ainsi progressivement augmentée. Cette dernière est également globalement augmentée lors du cycle pour contrer la désactivation du catalyseur. Néanmoins, cette augmentation de la température favorise le dépôt de coke accélérant les processus de colmatage. Ainsi, pour limiter une augmentation de température trop élevée, la fraction court-circuitée doit être d'autant plus limitée. La fraction de réacteur court-circuitée découle ainsi d'une optimisation entre gain de temps de cycle et augmentation limitée de la température.

Selon une variante préférée, la charge traverse à l'entrée de chaque zone de garde un plateau distributeur filtrant composé d'un seul étage ou de deux étages successifs, ledit plateau est situé en amont des lits catalytiques, de préférence en amont de chaque lit catalytique. Ce plateau distributeur filtrant, décrit dans le brevet US2009177023, permet de piéger les particules colmatantes contenues dans la charge au moyen d'un plateau distributeur spécifique comportant un milieu filtrant. Ainsi, le plateau filtrant permet d'augmenter le gain de temps de cycle dans le procédé d'hydrotraitement utilisant les zones de garde permutables. Ce plateau filtrant permet simultanément de distribuer la phase gaz (l'hydrogène et la partie gazeuse de la charge) et la phase liquide (la partie liquide de la charge) alimentant le réacteur tout en assurant une fonction de filtration vis à vis des impuretés contenues dans la charge. De même, le plateau filtrant assure une distribution du mélange plus homogène sur toute la surface du lit catalytique et limite les problèmes de maldistribution pendant la phase de colmatage du plateau lui même.

Plus précisément, le plateau filtrant est un dispositif de filtration et de distribution, ledit dispositif comprenant un plateau situé en amont du lit catalytique, ledit plateau étant constitué d'un plan de base sensiblement horizontal et solidaire des parois du réacteur et auquel sont fixées des cheminées sensiblement verticales, ouvertes à leur extrémité supérieure pour l'admission du gaz, et à leur extrémité inférieure pour l'évacuation du mélange gaz liquide destiné à alimenter le lit catalytique situé en aval, lesdites cheminées étant percées sur une certaine fraction de leur hauteur d'une fente latérale continue ou d'orifices latéraux pour l'admission du liquide, ledit plateau supportant un lit de filtration entourant les cheminées, et ledit lit de filtration étant constitué d'au moins une couche de particules de taille inférieure ou égale à la taille des particules du lit catalytique. Le lit de filtration est constitué de particules généralement inertes mais peut également comprendre au moins une couche de catalyseur identique ou appartenant à la même famille que le catalyseur du lit catalytique. Cette dernière variante permet de réduire le volume de lits catalytiques dans le réacteur.

Le plateau distributeur filtrant peut également comprendre deux étages et être composé de deux plateaux successifs : le premier plateau supportant un lit de garde composés de particules internes et d'au moins une couche de catalyseur identique ou appartenant à la même famille que le catalyseur du lit catalytique. Ce plateau est décrit dans le brevet US2009177023. Le lit est disposé sur une grille, la phase liquide s'écoule au travers du lit de garde et le gaz au travers de cheminées traversant le lit de garde et le premier plateau. En fin de colmatage le liquide et le gaz s'écoulent simultanément au travers des cheminées tout en permettant au deuxième plateau de continuer à assurer sa fonction de distribution. Le deuxième plateau assure la fonction de distribution du gaz et du liquide : il peut être composé de cheminées avec des perforations latérales pour el passage du liquide ou composé de « bubble-cap » ou « vapor-lift ».

Selon une autre variante, le procédé d'hydrotraitement selon la présente invention peut comprendre plus de deux réacteurs permutables (par exemple 3, 4 ou 5) fonctionnant selon le même principe de permutation et de by-pass, chaque réacteur permutable ayant au moins deux lits catalytiques.

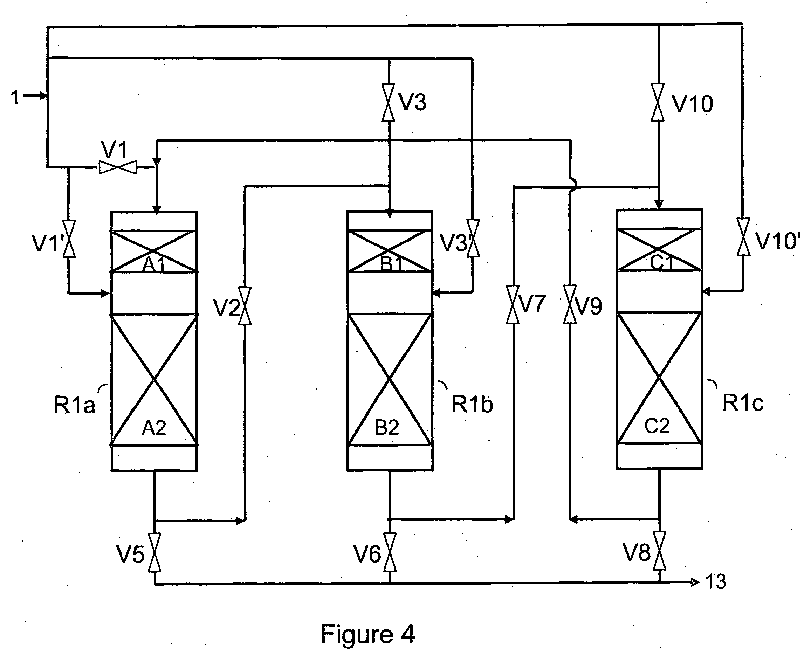

La figure 4 représenté le cas de trois zones de garde ayant chacune deux lits catalytiques. Le procédé comprendra, dans sa forme préférée de réalisation, une série de cycles comportant chacun neuf étapes successives :

- une étape a) au cours de laquelle la charge traverse successivement tous les lits catalytiques du réacteur R1a, puis tous les lits catalytiques du réacteur R1b et enfin tous les lits catalytiques du réacteur R1c,
- une étape a') (étape de by-pass) au cours de laquelle la charge court-circuite le lit catalytique désactivé et/ou colmaté A1 du premier réacteur R1a et est introduite dans le prochain lit catalytique A2 en aval du réacteur R1a, puis traverse tous les lits catalytiques du réacteur R1b et enfin tous les lits catalytiques du réacteur R1c,
- une étape b) au cours de laquelle la charge traverse tous les lits catalytiques du réacteur R1b, puis tous les lits catalytiques du réacteur R1c, le réacteur R1a étant court-circuité pour régénération et/ou remplacement du catalyseur,
- une étape c) au cours de laquelle la charge traverse successivement tous les lits catalytiques du réacteur R1b puis tous les lits catalytiques du réacteur R1c et enfin tous les lits catalytiques du réacteur R1 a,
- une étape c') (étape de by-pass) au cours de laquelle la charge court-circuite le lit catalytique désactivé et/ou colmaté B1 du deuxième réacteur R1b et est introduite dans le prochain lit catalytique B2 en aval du réacteur R1b, puis traverse tous les lits catalytiques du réacteur R1c, et enfin tous les lits catalytiques du réacteur R1a,
- une étape d) au cours de laquelle la charge traverse tous les lits catalytiques du réacteur R1 c, puis tous les lits catalytiques du réacteur R1 a, le réacteur R1 b étant court-circuité pour régénération et/ou remplacement du catalyseur,
- une étape e) au cours de laquelle la charge traverse successivement tous les lits catalytiques du réacteur R1c puis tous les lits catalytiques du réacteur R1a et enfin tous les lits catalytiques du réacteur R1b,
- une étape e') (étape de by-pass) au cours de laquelle la charge court-circuite le lit catalytique désactivé et/ou colmaté C1 du troisième réacteur R1c et est introduite dans le prochain lit catalytique C2 en aval du réacteur R1c, puis traverse tous les lits catalytiques du réacteur R1a, et enfin tous les lits catalytiques du réacteur R1b,
- une étape f) au cours de laquelle la charge traverse tous les lits catalytiques du réacteur R1a, puis tous les lits catalytiques du réacteur R1b, le réacteur R1c étant court-circuité pour régénération et/ou remplacement du catalyseur,

Dans le cas schématisé sur cette figure 4 le procédé fonctionne de manière équivalente à celle décrite en liaison avec la figure 2 (les signes de référence pour les lignes n'on pas été repris pour des questions de lisibilité).

Au cours de l'étape a) les vannes V1, V2, V7 et V8 sont ouvertes et les vannes V1', V3, V3', V5, V6, V9, V10 et V10' sont fermées.

Au cours de l'étape a') les vannes V1', V2, V7, V8 sont ouvertes et les vannes V1, V3, V3', V5, V6, V9, V10 et V10' sont fermées.

Au cours de l'étape b) les vannes V3, V7 et V8 sont ouvertes et les vannes V1, V1', V2, V3', V5, V6, V9, V10 et V10' sont fermées.

Au cours de l'étape c) les vannes V3, V7, V9 et V5 sont ouvertes et les vannes V1, V1', V2, V3', V6, V8, V10 et V10' sont fermées.

Au cours de l'étape c') les vannes V3', V7, V9 et V5 sont ouvertes et les vannes V1, V1', V2, V3, V6, V8, V10 et V10' sont fermées.

Au cours de l'étape d) les vannes V10, V9 et V5 sont ouvertes et les vannes V1, V1', V2, V3, V3', V6, V7, V8 et V10' sont fermées.

Au cours de l'étape e) les vannes V10, V9, V2 et V6 sont ouvertes et les vannes V1, V1', V3, V3', V5, V7, V8 et V10' sont fermées.

Au cours de l'étape e') les vannes V10', V9, V2 et V6 sont ouvertes et les vannes V1, V1', V3, V3', V5, V7, V8 et V10 sont fermées.

Au cours de l'étape f) les vannes V1, V2 et V6 sont ouvertes et les vannes V1', V3, V3', V5, V7, V8, V9, V10 et V10' sont fermées.

Les différentes variantes du procédé décrit ci-dessus pour un système de deux réacteurs permutables ayant deux lits catalytiques s'appliquent également sur un système ayant plus de deux réacteurs permutables. Ces différentes variantes sont notamment: le système de conditionnement, la possibilité d'avoir plus de deux lits catalytiques par réacteurs, la possibilité d'avoir des lits de volumes différents tels que définis ci-dessus, le volume du ou des lit(s) catalytique(s) court-circuité(s) dans une zone de garde étant inférieur à $((n-1)Vtot)/n$, le maintien du taux d'hydrotraitement par augmentation de la température, l'intégration d'un plateau filtrant à l'entrée de chaque réacteur en amont du premier lit catalytique, de préférence en amont de chaque lit catalytique.

Le procédé selon l'invention peut avantageusement être mis en oeuvre à une température comprise entre 320°C et 430°C, de préférence 350°C à 410°C, sous une pression partielle en hydrogène avantageusement comprise entre 3 MPa et 30 MPa, de préférence entre 10 et 20 MPa, à une vitesse spatiale (WH) avantageusement comprise entre 0,05 et 5 volume de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes. La valeur de la WH de chaque réacteur permutable en fonctionnement est de préférence d'environ 0,5 à 4 $h^{-1}$ et le plus souvent d'environ 1 à 2 $h^{-1}$. La valeur de WH globale des réacteurs permutables et celle de chaque réacteur est choisie de manière à réaliser le maximum d'HDM tout en contrôlant la température de réaction (limitation de l'exothermicité).

Les catalyseurs d'hydrotraitement utilisés sont de préférence des catalyseurs connus et sont généralement des catalyseurs granulaires comprenant, sur un support, au moins un métal ou composé de métal ayant une fonction hydrodéshydrogénante. Ces catalyseurs sont avantageusement des catalyseurs comprenant au moins un métal du groupe VIII, choisi généralement dans le groupe formé par le nickel et/ou le cobalt, et/ou au moins un métal du groupe VIB, de préférence du molybdène et/ou du tungstène. Le support utilisé est généralement choisi dans le groupe formé par l'alumine, la silice, les silices-alumines, la magnésie, les argiles et les mélanges d'au moins deux de ces minéraux. Préalablement à l'injection de la charge, les catalyseurs utilisés dans le procédé selon la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Les charges traitées dans le procédé selon l'invention sont avantageusement choisies parmi les résidus atmosphériques, les résidus sous vide issus de distillation directe, des pétroles bruts, des pétroles bruts étêtés, les huiles désasphaltées, les résidus issus des procédés de conversion tels que par exemple ceux provenant du coking, d'une hydroconversion en lit fixe, en lit bouillonnant, ou encore en lit mobile, les huiles lourdes de toute origine et en particulier issues de sables ou schistes bitumineux, pris seuls ou en mélange. Ces charges peuvent avantageusement être utilisées telles quelles ou encore diluées par une fraction hydrocarbonée ou un mélange de fractions hydrocarbonées pouvant être choisies parmi les produits issus d'un procédé de craquage catalytique en lit fluide (FCC selon les initiales de la dénomination anglo-saxonne de « Fluid Catalytic Cracking »), une huile de coupe légère (LCO selon les initiales de la dénomination anglo-saxonne de « Light Cycle Oil »), une huile de coupe lourde (HCO selon les initiales de la dénomination anglosaxonne de « Heavy Cycle Oil »), une huile décantée (DO selon les initiales de la dénomination anglo-saxonne de « Decanted Oil »), un résidu de FCC, ou pouvant venir de la distillation, les fractions gazoles notamment celles obtenues par distillation sous vide dénommée selon la terminologie anglo-saxonne VGO (« Vacuum Gas Oil »). Les charges lourdes peuvent aussi avantageusement comprendre des coupes issues du procédé de liquéfaction du charbon, des extraits aromatiques, ou toutes autres coupes hydrocarbonées ou encore des charges non pétrolières telles que des dérivés gazeux et/ou liquides (ne contenant pas ou peu de solides) de la conversion thermique (avec ou sans catalyseur et avec ou sans hydrogène) du charbon, de la biomasse ou des déchets industriels comme par exemple les polymères recyclés.

Lesdites charges lourdes présentent généralement plus de 1% en poids de molécules ayant un point d'ébullition supérieur à 500°C, une teneur en métaux Ni+V supérieure à 1 ppm poids, de préférence supérieure à 20 ppm poids, une teneur en asphaltènes, précipité dans l'heptane, supérieure à 0,05 % en poids, de préférence, supérieure à 1 % en poids.

Le procédé d'hydrotraitement selon l'invention permet d'effectuer 50 % et plus d'HDM de la charge à la sortie des réacteurs permutables (et plus précisément de 50 à 95 % d'HDM) grâce à la VVH choisie et l'efficacité du catalyseur d'HDM.

Le procédé d'hydrotraitement selon l'invention employant le système de zones de garde permutables incluant au moins une étape de court-circuitage précède avantageusement un procédé d'hydrotraitement de charges hydrocarbonées lourdes en lit fixe ou lit bouillonnant.

De préférence, il précède le procédé Hyvahl-F™ de la demanderesse comprenant au moins une étape d'hydrodémétallation et au moins une étape d'hydrodésulfuration, Le procédé selon l'invention est de préférence intégré en amont de la section d'HDM, les réacteurs permutables étant utilisées comme lits de gardes. Dans le cas représenté sur la figure 1, la charge 1 arrive dans le ou les réacteurs permutables de garde par la conduite 1 et ressort de ce ou ces réacteurs par la conduite 13. La charge sortant du ou des réacteur(s) de garde arrive par la conduite 13 dans la section d'hydrotraitement 14 et plus précisément dans la section d'HDM 15 comprenant un ou plusieurs réacteurs. L'effluent de la section d'HDM 15 est soutiré par la conduite 16, puis envoyé dans la section d'HDT 17 comprenant un ou plusieurs réacteurs. L'effluent final est soutiré par la conduite 18.

La présente invention concerne également une installation (figure 2) pour la mise en oeuvre du procédé selon l'invention comprenant au moins deux réacteurs (R1a, R1b) en lits fixes disposés en série et contenant chacun au moins deux lits catalytiques (A1, A2 ; B1,B2), le premier lit de chaque réacteur ayant au moins une conduite d'entrée pour un gaz (non représentée) et une conduite d'entrée pour une charge d'hydrocarbures (21, 22), lesdites conduites d'entrée de charge contenant chacune une vanne (V1, V3) et étant reliées par une conduite commune (3), chaque réacteur ayant au moins une conduite de sortie (23, 24) contenant chacune une vanne (V5, V6) pour l'évacuation de l'effluent, la conduite de sortie de chaque réacteur (23, 24) étant connectée par une conduite supplémentaire (26, 27) comportant une vanne (V2, V4) à la conduite d'entrée (22, 21) de la charge du réacteur en aval, caractérisé en ce que l'installation comprend en plus pour chaque réacteur une conduite d'entrée de charge pour chaque lit catalytique (31, 32), lesdites conduites comportant chacune une vanne (V1', V3') et étant connectées à ladite conduite d'entrée de la charge d'hydrocarbures du premier lit (21, 22), chaque vanne de l'installation pouvant être séparément ouverte ou fermée.

Selon une variante préférée, l'installation comprend un plateau distributeur filtrant composé d'un seul étage ou de deux étages successifs à l'entrée de chaque réacteur, situé en amont des lits catalytiques, de préférence en amont de chaque lit catalytique.

Exemple 1 (non conforme à **l'invention**)

La charge est constituée d'un mélange (70/30% pds) de résidu atmosphérique (RA) d'origine Moyen Orient (Arabian Medium) et d'un résidu sous vide (VR) d'origine Moyen Orient (Arabian Light). Ce mélange se caractérise par une viscosité élevée (0.91 cP) à température ambiante, une densité de 994 kg/m$^3$, de fortes teneurs en carbone conradson (14% en poids) et asphaltènes (6% en poids) et une quantité élevée de nickel (22 ppm en poids), vanadium (99 ppm en poids) et soufre (4,3 % en poids).

Le procédé d'hydrotraitement est mené selon le procédé décrit dans FR2681871 et comporte l'utilisation de deux réacteurs permutables. Les deux réacteurs sont chargés avec un catalyseur d'hydrodémétallation CoMoNi/alumine. Un cycle se définit comme intégrant les étapes de a) à d). Le temps de désactivation et/ou de colmatage est atteint quand la perte de charge atteint 0.7 MPa (7bars) et/ou la température moyenne d'un lit atteint 405°C et/ou lorsque l'écart de température sur un lit catalytique devient inférieure à 5°C.

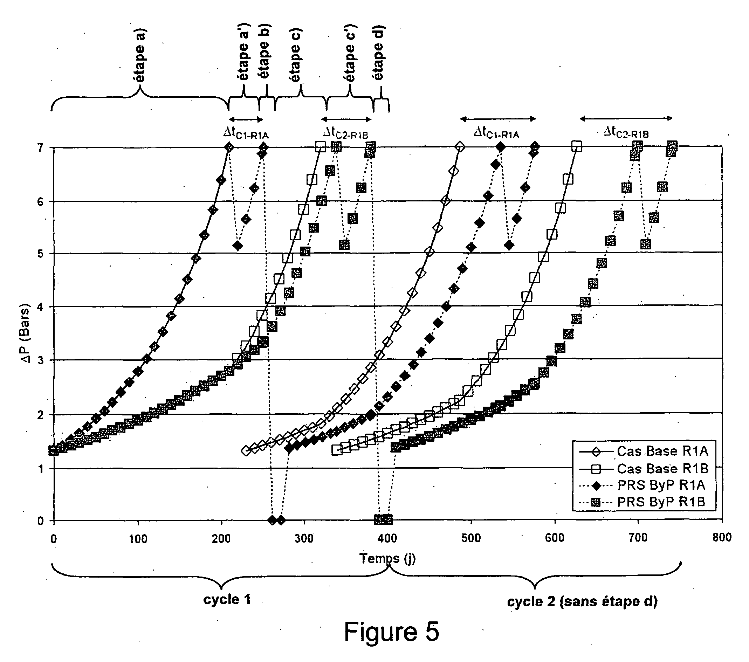

Le procédé s'effectue sous une pression de 19 MPa, une température en entrée de réacteur en début de cycle de 360°C et en fin de cycle de 400°C, et une VVH = 2h$^{-1}$ par réacteur permettant de maintenir un taux de démétallation voisin de 60%. Le tableau 3 et la figure 5 montre la durée de fonctionnement (en jours) pour le procédé selon FR 2681871 (sans by-pass). Ainsi, selon la figure 5, la courbe du réacteur R1a selon l'état de l'art (cas base R1a) montre au début du cycle une augmentation de la perte de charge dans le premier réacteur R1 a jusqu'à sa valeur maximalement tolérable (Δp = 0,7 MPa ou 7 bars) à partir de laquelle il faut procéder au remplacement du catalyseur. Dans le cas de l'état de l'art (FR268187), le temps de fonctionnement du réacteur R1a est donc de 210 jours. Lors du remplacement du catalyseur du réacteur R1a, la perte de charge dans le réacteur R1b a atteint environ 3 bars. Au cours de la phase suivante où la charge traverse le réacteur R1b puis le réacteur R1a contenant un catalyseur neuf, la perte de charge du réacteur R1b augmente jusqu'à la valeur maximale tolérable, qui est atteinte après 320 jours de fonctionnement. Un deuxième cycle peut être envisagé sur ces réacteurs permutables, en remplaçant le catalyseur du réacteur R1b.

Le temps de désactivation et/ou de colmatage (ou la durée de fonctionnement) de la première zone est donc de 210 jours. Au total, on observe une durée de cycle de 320 jours pour le premier cycle et de 627 jours pour deux cycles.

**Exemple 2 (conforme à l'invention)**

Le procédé d'hydrotraitement est répété avec la même charge et sous les mêmes conditions opératoires et le même catalyseur selon l'exemple 1, sauf que le procédé comporte l'utilisation de deux réacteurs permutables, chaque réacteur contenant deux lits catalytiques, le premier lit catalytique représentant un volume de 20 %, le deuxième représentant un volume de 80% (by-pass de 20 %) et on effectue le procédé selon l'invention. Un cycle se définit comme intégrant les étapes de a) à d). Le temps de désactivation et/ou de colmatage est atteint quand la perte de charge atteint 0.7 MPa (7bars) et/ou la température moyenne d'un lit atteint 405°C, et/ou lorsque l'écart de température sur un lit catalytique devient inférieure à 5°C. Lé taux d'HDM est maintenu à 60 %.

Le tableau 3 et la figure 5 montre le gain en durée de fonctionnement (en jours) pour le procédé selon l'invention avec une fraction court-circuitée de 20% dans chaque réacteur.

Tableau 3 : Gain en durée de fonctionnement (jours) sans by-pass externe (selon FR2681871) et avec un by-pass de 20 % dans chaque réacteur.

| Cas | Base (by-pass 0%) (Non conforme) | By-Pass 20% (conforme à l'invention) |
|---|---|---|
| Durée R1-A Cycle 1 | 210 j | 252 j |
| Durée R1-B Cycle 1 | 320 j | 380 j |
| Gain Total Fin 1 cycle | - | 60 j |
| Durée R1-A Cycle 2 | 487 j | 577 j |
| Durée R1-B Cycle 2 | 627j | 741 j |
| Gain Total Fin 2 cycles | - | 114 j |

Il apparaît donc que le procédé d'hydrotraitement intégrant une fraction court-circuitée de 20% permet d'augmenter la durée d'un premier cycle de 60 jours (soit de 18,75%) et de 114 jours pour deux cycles (soit de 18,2%) tout eh maintenant un taux d'HDM de 75% équivalent au taux d'HDM selon le procédé sans by-pass externe.

La Figure 5 donne l'évolution de la perte de charge au cours du temps mesurée dans les réacteurs R1a et R1b sans by-pass externe (selon FR2681871, courbes cas Base R1a et R1b) et dans les réacteurs R1a et R1b avec un by-pass externe de 20% (selon l'invention, courbes PRS ByP R1a et R1b).

Ainsi, selon la figure 5, la courbe du réacteur R1 a (courbe PRS ByP R1 a) montre au début du cycle une augmentation de la perte de charge dans le premier réacteur R1a jusqu'à sa valeur maximalement tolérable ($\Delta p$ = 0,07 MPa ou 7 bars). Cette valeur atteinte, le by-pass court-circuite le premier lit et la charge est introduite sur le deuxième lit A2 du réacteur R1a. La perte de charge dans le réacteur baisse alors soudainement (crochet dans la courbe PRS ByP R1a), sans revenir à la perte de charge initiale, pour progressivement réaugmenter jusqu'au point où le prochain (deuxième) lit est colmaté et que la valeur limite de la perte de charge est à nouveau atteinte. Le gain de temps obtenu à la fin de l'étape a') est alors $\Delta t_{C1-R1a}$ (32 jours). La perte de charge du réacteur R1a chute ensuite brutalement car le système passe en étape b) durant laquelle le catalyseur du réacteur R1a est remplacé. La charge traverse alors uniquement le réacteur R1b, puis R1b et R1a après le remplacement. La courbe R1b (courbe PRS ByP R1b) montre la perte de charge du deuxième réacteur R1b en fonction du temps. On observe le même phénomène de gain de temps par le by-pass externe à la fin de l'étape c') : $\Delta t_{C2-R1b}$ (60jours).

La figure 2 montre également un deuxième cycle des réacteurs permutables. Le gain du temps après 2 cycles successifs est alors $At_{C2-R1b}$ (114 jours). On observe que plus il y a de cycles, plus le gain de temps est important.

**Revendications**

1. Procédé d'hydrotraitement d'une fraction lourde d'hydrocarbures contenant des asphaltènes, des sédiments, des impuretés soufrées, azotées et métalliques dans lequel on fait passer, dans des conditions d'hydrotraitement à une température comprise entre 320°C et 430°C, sous une pression partielle en hydrogène comprise entre 3 MPa et 30 MPa, à une vitesse spatiale comprise entre 0,05 et 5 volume de charge par volume de catalyseur et par heure et avec un rapport hydrogène gazeux sur charge liquide d'hydrocarbures compris entre 200 et 5000 normaux mètres cubes par mètres cubes, la charge d'hydrocarbures et d'hydrogène sur un catalyseur d'hydrotraitement, dans au moins deux zones de garde d'hydrotraitement en lits fixes contenant chacune au moins deux lits catalytiques, les zones de garde étant disposées en série pour être utilisées de façon cyclique consistant en la répétition successive des étapes b), c) et c') définies ci-après :

- une étape a) durant laquelle la charge traverse tous les lits catalytiques des zones de garde pendant une durée au plus égale au temps de désactivation et/ou de colmatage d'une zone de garde,
- une étape a') durant laquelle la charge est introduite, en court-circuitant le lit catalytique désactivé et/ou colmaté, sur le prochain lit catalytique non encore désactivé et/ou colmaté de la même zone de garde pendant une durée au plus égale au temps de désactivation et/ou de colmatage d'une zone de garde,
- l'étape a') étant répétée jusqu'à ce que la charge soit introduite sur le dernier lit catalytique non encore désactivé et/ou colmaté de la même zone de garde pendant une durée au plus égale au temps de désactivation et/ou de colmatage,
- une étape b) durant laquelle la zone de garde désactivée et/ou colmatée est court-circuitée et le catalyseur qu'elle contient est régénéré et/ou remplacé par du catalyseur frais et durant laquelle la ou les autres zones(s) de garde sont utilisée(s),
- une étape c) durant laquelle la charge traverse tous les lits catalytiques des zones de garde, la zone de garde dont le catalyseur a été régénéré au cours de l'étape précédente étant reconnectée de manière à être en aval de l'ensemble des autres zones de garde et ladite étape étant poursuivie pendant une durée au plus égale au temps de désactivation et/ou de colmatage d'une zone de garde,
- une étape c') durant laquelle la charge est introduite sur le prochain lit catalytique non encore désactivé et/ou colmaté de la même zone de garde pendant une durée au plus égale au temps de désactivation et/ou de colmatage d'une zone de garde, l'étape c') étant répétée jusqu'à ce que la charge soit introduite sur le dernier lit catalytique non encore désactivé et/ou colmaté de la même zone de garde pendant une durée au plus égale au temps de désactivation et/ou de colmatage d'une zone de garde.

2. Procédé selon la revendication 1 dans lequel chaque zone de garde possède n lits, chaque lit i ayant une volume $V_i$, le volume catalytique total de la zone de garde $V_{tot}$ étant la somme des volumes $V_i$ des n lits ; chaque volume $V_i$ d'un lit i compris dans les n-1 premier lits de la zone de garde a un volume $V_i$ définit entre 5% du volume total $V_{tot}$ et le pourcentage résultant du volume total $V_{tot}$ divisé par le nombre de lits n ; et dans lequel pour deux lits consécutifs i et i+1, le volume du premier lit $V_i$ est inférieur ou égal au volume du prochain lit $V_{i+1}$, sauf pour les deux derniers lits consécutifs $V_{n-1}$ et $V_n$ où le volume de l'avant dernier lit $V_{n-1}$ est strictement inférieur au volume du dernier lit $V_n$.

3. Procédé selon l'une des revendications précédentes dans lequel pendant les étapes a') et c') le volume maximal du ou des lit(s) catalytique(s) court-circuité(s) dans une zone de garde est définit comme inférieur au volume exprimé par la formule $((n-1)\,V_{tot})/n$, n étant le nombre total de lits catalytiques, $V_{tot}$ étant le volume catalytique total de la zone de garde qui se définit par la somme des volumes des n lits catalytiques de la zone de garde.

4. Procédé selon l'une des revendications précédentes dans lequel le taux d'hydrotraitement est maintenu par une augmentation de la température.

5. Procédé selon l'une des revendications précédentes dans lequel la charge traverse à l'entrée de chaque zone de garde un plateau distributeur filtrant composé d'un seul étage ou de deux étage successifs, ledit plateau est situé en amont des lits catalytiques

6. Procédé selon l'une des revendications précédentes dans lequel la charge traverse un plateau distributeur filtrant en amont de chaque lit catalytique d'une zone de garde.

7. Procédé selon l'une des revendications précédentes **caractérisé en ce qu'**il précède un procédé d'hydrotraitement en lit fixe ou lit bouillonnant.

8. Installation pour la mise en oeuvre du procédé selon la revendication 1 comprenant au moins deux réacteurs (R1a, R1b) en lits fixes disposés en série et contenant chacun au moins deux lits catalytiques (A1, A2 ; B1, B2), le premier lit de chaque réacteur ayant au moins une conduite d'entrée pour un gaz et une conduite d'entrée pour une charge d'hydrocarbures (21, 22), lesdites conduites d'entrée de charge contenant chacune une vanne (V1, V3) et étant reliées par une conduite commune (3), chaque réacteur ayant au moins une conduite de sortie (23, 24) contenant chacune une vanne (V5, V6) pour l'évacuation de l'effluent, la conduite de sortie de chaque réacteur (23, 24) étant connectée par une conduite supplémentaire (26, 27) comportant une vanne (V2, V4) à la conduite d'entrée (22, 21) de la charge du réacteur en aval, **caractérisé en ce que** l'installation comprend en plus pour chaque réacteur une conduite d'entrée de charge pour chaque lit catalytique (31, 32), lesdites conduites comportant chacune une vanne (V1', V3') et étant connectées à ladite conduite d'entrée de la charge d'hydrocarbures du premier lit (21, 22), chaque vanne de l'installation pouvant être séparément ouverte ou fermée.

**9.** Installation selon la revendication précédente **caractérisée en ce qu'**elle comprend un plateau distributeur filtrant composé d'un seul étage ou de deux étages successifs à l'entrée de chaque réacteur, ledit plateau est situé en amont des lits catalytiques.

**10.** Installation selon l'une des deux revendications précédentes **caractérisées en ce qu'**elle comprend un plateau distributeur filtrant composé d'un seul étage ou de deux étages successifs en amont de chaque lit catalytique.


**Patentansprüche**

**1.** Verfahren zur Wasserstoffbehandlung einer schweren Kohlenwasserstofffraktion, die Asphaltene, Sedimente, schwefelhaltige, stickstoffhaltige und metallische Verunreinigungen enthält, wobei, unter Wasserstoffbehandlungsbedingungen bei einer Temperatur im Bereich zwischen 320 °C und 430 °C, unter einem Wasserstoffpartialdruck im Bereich zwischen 3 MPa und 30 MPa, bei einer Raumgeschwindigkeit im Bereich zwischen 0,05 und 5 Chargenvolumen je Katalysatorvolumen und je Stunde und mit einem Verhältnis gasförmiger Wasserstoff zu flüssiger Kohlenwasserstoffcharge im Bereich zwischen 200 und 5.000 Normkubikmeter je Kubikmeter, die Charge aus Kohlenwasserstoffen und Wasserstoff durch einen Wasserstoffbehandlungskatalysator in mindestens zwei Wasserstoffbehandlungsschutzzonen in Festbetten, die jeweils mindestens zwei katalytische Betten enthalten, geleitet wird, wobei die Schutzzonen zur zyklischen Verwendung in Reihe angeordnet sind, die in der fortlaufenden Wiederholung der nachfolgend definierten Schritte b), c) und c') besteht:

- ein Schritt a), in dessen Verlauf die Charge alle katalytischen Betten der Schutzzonen für eine Dauer von höchsten gleich der Deaktivierungs- und/oder Verstopfungszeit einer Schutzzone durchläuft,
- ein Schritt a'), in dessen Verlauf die Charge eingeführt wird, indem das deaktivierte und/oder verstopfte katalytische Bett mit dem nächsten noch nicht deaktivierten und/oder verstopften katalytischen Bett der gleichen Schutzzone für eine Dauer von höchstens gleich der Deaktivierungs- und/oder Verstopfungszeit einer Schutzzone kurzgeschlossen wird,
- wobei Schritt a') wiederholt wird, bis die Charge in das letzte noch nicht deaktivierte und/oder verstopfte katalytische Bett der gleichen Schutzzone für eine Dauer von höchstens der Deaktivierungs- und/oder Verstopfungszeit eingeführt wird,
- ein Schritt b), in dessen Verlauf die deaktivierte und/oder verstopfte Schutzzone kurzgeschlossen wird und der Katalysator, den sie enthält, regeneriert und/oder durch frischen Katalysator ersetzt wird, und in dessen Verlauf die andere(n) Schutzzone(n) verwendet wird (werden),
- ein Schritt c), in dessen Verlauf die Charge alle katalytischen Betten der Schutzzonen durchläuft, wobei die Schutzzone, deren Katalysator während des vorhergehenden Schritts regeneriert wurde, wieder angeschlossen wird, um sich stromabwärts der Gesamtheit der anderen Schutzzonen zu befinden und wobei der Schritt während einer Dauer von höchstens gleich der Deaktivierungs- und/oder Verstopfungszeit einer Schutzzone fortgesetzt wird,
- ein Schritt c'), in dessen Verlauf die Charge in das nächste noch nicht deaktivierte und/oder verstopfte katalytische Bett der gleichen Schutzzone für eine Dauer von höchstens gleich der Deaktivierung- und/oder Verstopfungszeit einer Schutzzone eingeführt wird, wobei der Schritt c') wiederholt wird, bis die Charge in das letzte noch nicht deaktivierte und/oder verstopfte katalytische Bett der gleichen Schutzzone für eine Dauer von höchstens gleich der Deaktivierung- und/oder Verstopfungszeit einer Schutzzone eingeführt wird.

**2.** Verfahren nach Anspruch 1, wobei jede Schutzzone über n Betten verfügt, wobei jedes Bett i ein Volumen $V_i$ aufweist, wobei das katalytische Gesamtvolumen $V_{tot}$ der Schutzzone die Summe der Volumina $V_i$ der n Betten ist; jedes Volumen $V_i$ eines Betts i, das in den n-1 ersten Betten der Schutzzone enthalten ist, ein Volumen $V_i$ hat, das zwischen 5 % des Gesamtvolumens $V_{tot}$ und dem Prozentsatz definiert ist, der aus dem Gesamtvolumen $V_{tot}$ geteilt durch die Anzahl der Betten n resultiert; und wobei für zwei aufeinander folgende Betten i und i+1 das Volumen des ersten Betts $V_i$ kleiner oder gleich dem Volumen des nächsten Betts $V_{i+1}$ ist, außer für die beiden letzten aufeinander folgenden Betten $V_{n-1}$ und $V_n$, worin das Volumen des vorletzten Betts $V_{i-1}$ strikt kleiner ist als das Volumen des letzten Betts $V_n$.

**3.** Verfahren nach einem der vorhergehenden Ansprüche, wobei im Verlauf der Schritte a') und c') das maximale Volumen des oder der kurzgeschlossenen katalytischen Betten in der Schutzzone als kleiner als das Volumen, ausgedrückt durch die Formel $((n-1)V_{tot})/n$, definiert ist, wobei n für die Gesamtanzahl an katalytischen Betten steht, $V_{tot}$ für das katalytische Gesamtvolumen der Schutzzone steht, das durch die Summe der Volumina der n katalytischen Betten der Schutzzone definiert ist.

**4.** Verfahren nach einem der vorhergehenden Ansprüche, wobei der Wasserstoffbehandlungsgrad durch eine Erhöhung der Temperatur aufrechterhalten wird.

**5.** Verfahren nach einem der vorhergehenden Ansprüche, wobei die Charge am Eingang jeder Schutzzone einen Filter-Verteilerboden durchläuft, der aus einer einzigen Stufe oder aus zwei aufeinander folgenden Stufen besteht, wobei der Boden stromaufwärts der katalytischen Betten liegt.

**6.** Verfahren nach einem der vorhergehenden Ansprüche, wobei die Charge einen Filter-Verteilerboden stromaufwärts jedes katalytischen Betts einer Schutzzone durchläuft.

**7.** Verfahren nach einem der vorhergehenden Ansprüche, **dadurch gekennzeichnet, dass** ihm ein Wasserstoffbehandlungsverfahren im Festbett oder im Wirbelbett vorausgeht.

**8.** Anlage zur Durchführung des Verfahrens nach Anspruch 1, umfassend mindestens zwei Reaktoren (R1a, R1b) mit Festbetten, die in Reihe angeordnet sind und jeweils mindestens zwei katalytische Betten (A1, A2; B1, B2) enthalten, wobei das erste Bett jedes Reaktors mindestens eine Einlassleitung für ein Gas und eine Einlassleitung für eine Kohlenwasserstoffcharge (21, 22) aufweist, wobei die Einlassleitungen für den Einsatz jeweils ein Ventil (V1, V3) enthalten und mit einer gemeinsamen Leitung (3) verbunden sind, wobei jeder Reaktor mindestens eine Auslassleitung (23, 24), die jeweils ein Ventil (V5, V6) enthält, zum Ableiten des Abflusses aufweist, wobei die Auslassleitung jedes Reaktors (23, 24) mit einer zusätzlichen Leitung (26, 27), die ein Ventil (V2, V4) umfasst, mit der Einlassleitung (22, 21) des Einsatzes des stromabwärtigen Reaktors verbunden ist, **dadurch gekennzeichnet, dass** die Anlage ferner für jeden Reaktor eine Einlassleitung für die Charge für jedes katalytische Bett (31, 32) umfasst, wobei die Leitungen jeweils ein Ventil (V1', V3') umfassen und mit der Einlassleitung der Kohlenwasserstoffcharge des ersten Betts (21, 22) verbunden sind, wobei jedes Ventil der Anlage getrennt geöffnet oder geschlossen werden kann.

**9.** Anlage nach dem vorhergehenden Anspruch, **dadurch gekennzeichnet, dass** sie einen Filter-Verteilerboden, der aus einer einzigen Stufe oder aus zwei aufeinander folgenden Stufen besteht, am Einlass jedes Reaktors umfasst, wobei der Boden stromaufwärts der katalytischen Betten liegt.

**10.** Anlage nach einem der beiden vorhergehenden Ansprüche, **dadurch gekennzeichnet, dass** sie einen Filter-Verteilerboden, der aus einer einzigen Stufe oder aus zwei aufeinander folgenden Stufen besteht, stromaufwärts jedes katalytischen Betts umfasst.

**Claims**

**1.** Process for hydrotreating a heavy hydrocarbon fraction containing asphaltenes, sediments, sulphur-containing, nitrogen-containing and metallic impurities, in which the feed of hydrocarbons and hydrogen is passed, under conditions of hydrotreating, at a temperature between 320°C and 430°C, at a hydrogen partial pressure advantageously between 3 MPa and 30 MPa, at a space velocity (HSV) advantageously between 0.05 and 5 volumes of feed per volume of catalyst and per hour, and with a ratio of hydrogen gas to liquid hydrocarbon feed advantageously between 200 and 5000 normal cubic metres per cubic metre, over a hydrotreating catalyst, in at least two fixed bed hydrotreating guard zones each containing at least two catalyst beds, the guard zones being arranged in series to be used cyclically, consisting of successive repetition of steps b), c) and c') defined below:

- a step a) during which the feed passes through all the catalyst beds of the guard zones for a period at most equal to the deactivation time and/or clogging time of a guard zone,
- a step a') during which the feed is introduced, by-passing the deactivated and/or clogged catalyst bed, onto the next catalyst bed not yet deactivated and/or clogged of the same guard zone for a period at most equal to the deactivation time and/or clogging time of a guard zone,
- step a') being repeated until the feed is introduced onto the last catalyst bed not yet deactivated and/or clogged of the same guard zone for a period at most equal to the deactivation time and/or clogging time,
- a step b) during which the deactivated and/or clogged guard zone is by-passed and the catalyst that it contains is regenerated and/or replaced with fresh catalyst and during which the other guard zone(s) are used,
- a step c) during which the feed passes through all the catalyst beds of the guard zones, the guard zone of which the catalyst was regenerated during the preceding step being reconnected so as to be downstream of all the other guard zones and said step being continued for a period at most equal to the deactivation time and/or clogging time of a guard zone,

- a step c') during which the feed is introduced onto the next catalyst bed not yet deactivated and/or clogged of the same guard zone for a period at most equal to the deactivation time and/or clogging time of a guard zone, step c') being repeated until the feed is introduced onto the last catalyst bed not yet deactivated and/or clogged of the same guard zone for a period at most equal to the deactivation time and/or clogging time of a guard zone.

2. Process according to claim 1 in which each guard zone has n beds, each bed i having a volume $V_i$, the total catalyst volume of the guard zone $V_{tot}$ being the sum of the volumes $V_i$ of the n beds; each volume $V_i$ of a bed i included in the n-1 first beds of the guard zone has a volume $V_i$ defined between 5% of the total volume $V_{tot}$ and the percentage resulting from the total volume $V_{tot}$ divided by the number of beds n; and in which for two consecutive beds i and i+1, the volume of the first bed $V_i$ is less than or equal to the volume of the next bed $V_{i+1}$, except for the last two consecutive beds $V_{n-1}$ and $V_n$ where the volume of the penultimate bed $V_{n-1}$ is strictly less than the volume of the last bed $V_n$.

3. Process according to one of the preceding claims in which during steps a') and c') the maximum volume of the by-passed catalyst bed(s) in a guard zone is defined as less than the volume given by the formula $((n-1) V_{tot})/n$, n being the total number of catalyst beds, $V_{tot}$ being the total catalyst volume of the guard zone which is defined by the sum of the volumes of the n catalyst beds of the guard zone.

4. Process according to one of the preceding claims in which the degree of hydrotreating is maintained by a temperature increase.

5. Process according to one of the preceding claims in which, at the entrance of each guard zone, the feed passes through a filtering distributor plate composed of a single stage or of two successive stages, said plate is situated upstream of the catalyst beds.

6. Process according to one of the preceding claims in which the feed passes through a filtering distributor plate upstream of each catalyst bed of a guard zone.

7. Process according to one of the preceding claims, **characterized in that** it precedes a fixed bed or ebullating bed hydrotreating process.

8. Installation for implementing the process according to claim 1 comprising at least two fixed bed reactors (R1a, R1b) arranged in series and each containing at least two catalyst beds (A1, A2; B1, B2), the first bed of each reactor having at least one inlet pipe for a gas and an inlet pipe for a hydrocarbon feed (21, 22), said feed inlet pipes each containing a valve (V1, V3) and being connected by a common pipe (3), each reactor having at least one outlet pipe (23, 24) each containing a valve (V5, V6) for removal of the effluent, the outlet pipe of each reactor (23, 24) being connected by an additional pipe (26, 27) having a valve (V2, V4) to the feed inlet pipe (22, 21) of the reactor downstream, **characterized in that** the installation further comprises, for each reactor, a feed inlet pipe for each catalyst bed (31, 32), said pipes each having a valve (V1', V3') and being connected to said inlet pipe for the hydrocarbon feed of the first bed (21, 22), each valve of the installation being able to be opened or closed separately.

9. Installation according to the preceding claim, **characterized in that** it comprises a filtering distributor plate composed of a single stage or of two successive stages at the entrance of each reactor, said plate is situated upstream of the catalyst beds.

10. Installation according to one of the two preceding claims, **characterized in that** it comprises a filtering distributor plate composed of a single stage or of two successive stages upstream of each catalyst bed.

Figure 1

Figure 2

Figure 3

EP 2 663 616 B1

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3910834 A
- GB 2124252 A
- US 4118310 A
- US 3968026 A
- FR 2681871
- US 5417846 A
- US 2009177023 A
- FR 268187

**Littérature non-brevet citée dans la description**

- **ZONG et al.** *Recent Patents on Chemical Engineering,* 2009, vol. 2, 22-36